# EUROPÄISCHE PATENTSCHRIFT

(11) **EP 1 223 243 B1**
(45) Veröffentlichungstag und Bekanntmachung des Hinweises auf die Patenterteilung: **02.01.2004**
(21) Anmeldenummer: 01100629.3
(22) Anmeldetag: 11.01.2001
(51) Int. Cl.: D06M 23/12

(54) **Verwendung von Chitosanmikrokapseln**
Use of chitosan microcapsules
Utilisation de microcapsules de chitosane

(43) Veröffentlichungstag der Anmeldung: 17.07.2002
(73) Patentinhaber: Cognis Iberia, S.L., 08755 Castellbisbal, (Barcelona) (ES)
(72) Erfinder: Petit, Josep-Luis Viladot, 08036 Barcelona (ES); Garces, Josep Garces, 08760 Martrell (Barcelona) (ES); Tacies, Anna, Barcelona (ES)
(74) Vertreter: Fabry, Bernd, Dr.

(56) Entgegenhaltungen:
- EP-A- 0 306 202
- EP-A- 1 002 810
- EP-A- 1 064 910
- DATABASE WPI Section Ch, Week 198842 Derwent Publications Ltd., London, GB; Class G04, AN 1988-296588 XP002168208 & JP 63 217196 A (NIPPON CAPSULE PROD), 9. September 1988 (1988-09-09)

## Beschreibung

### Gebiet der Erfindung

Die Erfindung befindet sich auf dem Gebiet der Textiltechnik und betrifft die Verwendung von speziellen Chitosanmikrokapseln zur Ausrüstung von Fasern, Garnen und textilen Flächengebilden.

### Stand der Technik

Ein neuer Trend bei der Herstellung von Bekleidung geht darin, solche Materialien einzusetzen, die in der Lage sind, die beim Tragen vom menschlichen Körper abgestrahlte Wärme zu speichern und gegebenenfalls wieder abzugeben und so unabhängig vom äußeren Klima für eine konstante Körpertemperatur zu sorgen. Dieser Effekt hat insbesondere für Bekleidung, die für die kühleren Jahreszeiten oder den Wintersport gedacht ist, eine besondere Bedeutung, weil so der Auskühlung entgegenwirkt würde. Umgekehrt könnten solche Materialien auch im Fall von übergroßer Hitze von Interesse sein, wenn sie nämlich in der Lage sind, die thermische Energie in bestimmtem Umfang abzuleiten und zu speichern und so beispielsweise die jetzt bekannten feuerfesten Textilien beispielsweise auf Basis von Polybenzimidazolinfasern weiter verbessern würden.

Entsprechende Materialien sind aus dem Stand der Technik seit einigen Jahren bekannt. So wird in der Patentschrift **US 5,290,904** (Triangle) vorgeschlagen, feuerfeste Materialien herzustellen, in dem man übliche Textilien in geeigneter Weise mit sogenannten "Phase Change Materials (PCM)" beschichtet. Bei diesen PCM handelt es sich um vergleichsweise Paraffinwachse mit 20 bis 50 Kohlenstoffatomen, welche als Hitzeschilde fungieren und die von außen einwirkende thermische Energie durch Änderung ihres Aggregatzustandes ableiten. Die Paraffinwachse liegen dabei in mikronisierter Form vor und weisen mittlere Durchmesser von unter 10 µm auf.

Die Eigenschaft der Speicherung von thermischer Energie durch Schmelzen entsprechender Paraffinwachse lässt sich von der Herstellung feuerfester Bekleidung auch auf solche Textilien übertragen, bei denen es eher umgekehrt darum geht, die Körperwärme zu regulieren, d.h. auf konstanter Höhe zu halten und insbesondere eine Unterkühlung zu vermeiden. Aus den Patentschriften **US 5,667,048; US 5,851,338; US 5,955,188; US 6,077,597** (Outlast) sowie der internationalen Patentanmeldung **WO 00/05970** (Frisby) sind körpertemperaturregulierende Bekleidungsstücke bekannt, welche mikronisierte Paraffinwachse in einer Schaummatrix enthalten, die ihrerseits eine isolierende Schicht zwischen dem eigentlichen textilen Flächengebilde und einem polymeren Überzug bilden.

Von Nachteil ist jedoch, dass die bekannten Systeme die thermische Engergie nicht ausreichend lange speichern und im Endeffekt doch rascher abgeben als sie in der Lage sind, neue Energie wieder aufzunehmen. Dadurch wird der Effekt eines allmählichen Auskühlens zwar verzögert, aber letztendlich nicht verhindert. Die Aufgabe der vorliegenden Erfindung hat somit darin bestanden, Phase Change Materials in Anbietungsformen zur Verfügung zu stellen, die gegenüber dem Stand der Technik ein verbessertes Speichervermögen aufweisen.

### Beschreibung der Erfindung

Gegenstand der Erfindung ist die Verwendung von mit Wachsen beladenen Chitosanmikrokapseln als Wärmespeicher zur Ausrüstung von Fasern, Garnen und textilen Flächengebilden, wie z.B. Gewirken, Stoffen und allen Arten der daraus erhältlichen Textilien. Die Mikrokapseln können dabei - in Abhängigkeit ihres Durchmessers - sowohl in die Zwischenräume der Fasern eingebracht oder zur Beschichtung der Endprodukte, gegebenenfalls eingebettet in eine Matrix eingesetzt werden.

Überraschenderweise wurde gefunden, dass Speicherwachse, die in einer Chitosanmatrix verkapselt vorliegen gegenüber der rein mikronisierten Form ein verbessertes Speichervermögen aufweisen. Der Einsatz dieser Art von Mikrokapseln führt gegenüber den Produkten des Stands der Technik zu einer deutlichen Verlängerung des körpertemperaturregulierenden Effektes.

### Wachse

Als "Phase Change Materials" kommen beispielsweise natürliche Wachse, wie z.B. Candefillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachse, Mikrowachse, aber auch chemisch modifizierte Wachse (Hartwachse), wie z.B. Montanesterwachse, Sasolwachse, hydrierte Jojobawachse sowie synthetische Wachse, wie z.B. Polyalkylenwachse und Polyethylenglycolwachse in Frage.

### Chitosanmikrokapseln

Unter dem Begriff "Mikrokapsel" werden vom Fachmann sphärische Aggregate mit einem Durchmesser im Bereich von etwa 0,1 bis etwa 5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Die mikroskopisch kleinen Kapseln, auch Nanokapseln genannt, lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccaride, wie Stärke oder Dextran, Polypeptide, Proteinghydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammem angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylceilulose); *Unicerin C30 (Lactose, mikrokristalline Cellulose,* Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres (Phospholipide).*

In diesem Zusammenhang sei auch auf die deutsche Patentanmeldung **DE 19712978 A1** (Henkel) hingewiesen, aus der Chitosanmikrosphären bekannt sind, die man erhält, indem man Chitosane oder Chitosanderivate mit Ölkörpern vermischt und diese Mischungen in alkalisch eingestellte Tensidlösungen einbringt. Aus der deutschen Patentanmeldung **DE 19756452 A1** (Henkel) ist ferner auch die Verwendung von Chitosan als Verkapselungsmaterial für Tocopherol bekannt. Chitosanmikrokapseln und Verfahren zu ihrer Herstellung sind Gegenstand früherer Patenanmeldungen der Pantentanmelderin. Man unterscheidet dabei im wesentlichen die beiden folgenden Verfahren:
(1) Mikrokapseln mit mittleren Durchmessern im Bereich von 0,1 bis 5 mm, bestehend aus einer Hüllmembran und einer mindestens ein Wachs enthaltenden Matrix, erhältlich, indem man
   (a) aus Gelbildnern, Chitosanen und Wachsen eine Matrix zubereitet,
   (b) gegebenenfalls die Matrix in einer Ölphase dispergiert,
   (c) die dispergierte Matrix mit wässrigen Lösungen anionischer Polymere behandelt und gegebenenfalls dabei die Ölphase entfernt.
(2) Mikrokapseln mit mittleren Durchmessern im Bereich von 0,1 bis 5 mm, bestehend aus einer Hüllmembran und einer mindestens ein Wachs enthaltenden Matrix, erhältlich, indem man
   (a) aus Gelbildnern, anionischen Polymeren und Wachsen eine Matrix zubereitet,
   (b) gegebenenfalls die Matrix in einer Ölphase dispergiert,
   (c) die dispergierte Matrix mit wässrigen Chitosanlösungen behandelt und gegebenenfalls dabei die Ölphase entfernt.

### Gelbildner

Als Gelbildner vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Hetereopolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.

### Chitosane

Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

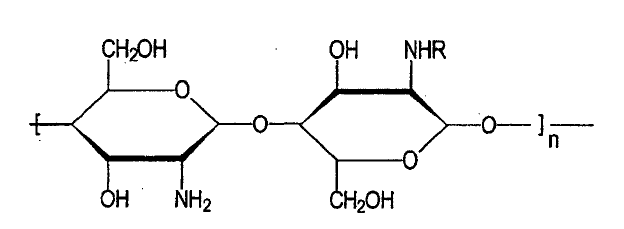

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt (vgl. **Ullmann's Encydopedia of Industrial Chemistry, 5th Ed., Vol. A6, Weinheim, Verlag Chemie, 1986, S. 231-232).** Übersichten zu diesem Thema sind auch beispielsweise von B. Gesslein et al. in **HAPPI 27, 57 (1990),** O. Skaugrud in **Drug Cosm.Ind. 148, 24 (1991)** und E. Onsoyen et al. in **Seifen-Öle-Fette-Wachse 117, 633 (1991)** erschienen. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Entsprechende Verfahren sind beispielsweise aus **Makromol. Chem. 177, 3589 (1976)** oder der französischen Patentanmeldung **FR** **2701266 A** bekannt. Vorzugsweise werden solche Typen eingesetzt, wie sie in den deutschen Patentanmeldungen **DE 4442987 A1** und **DE 19537001 A1** (Henkel) offenbart werden und die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.

### Anionische Polymere

Die anionischen Polymeren haben die Aufgabe, mit den Chitosanen Membranen zu bilden. Je nach Herstellverfahren können sie in der Matrix enthalten sein (dann erfolgt die Membranbildung durch Behandlung mit den Chitosanlösungen) oder als Fällungsmittel für die in der Matrix enthaltenen Chitosane dienen. Als anionische Polymere eignen sich vorzugsweise Salze der Alginsäure. Bei der Alginsäure handelt es sich um ein Gemisch carboxylgruppenhaltiger Polysaccharide mit folgendem idealisierten Monomerbaustein:

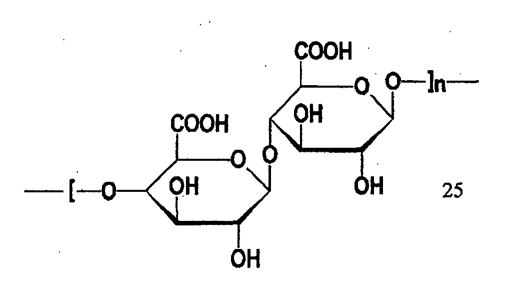

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage, wie sie beispielsweise in der deutschen Patentschrift **DE 3713099 C2** (L'Oréal) sowie der deutschen Patentanmeldung **DE 19604180 A1** (Henkel) beschrieben werden.

### Herstellung der Matrix

Zur Herstellung der Chitosanmikrokapseln stellt man beispielsweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100°C, wird eine zweite wässrige Lösung zugegeben, welche das Chitosan in Mengen von 0,1 bis 2, vorzugsweise 0,25 bis 0,5 Gew.-% und das Wachs in Mengen von 0,1 bis 25 und insbesondere 0,25 bis 10 Gew.-% enthält; diese Mischung wird als Matrix bezeichnet Die Beladung der Mikrokapseln mit Wachsen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wachse kann es ferner von Nutzen sein, der Matrix Emulgatoren und/oder Lösungsvermittler hinzuzugeben.

### Emulgatoren

Als Emulgatoren kommen beispielsweise nichtionogene Tenside aus mindestens einer der folgenden Gruppen in Frage:
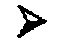 Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
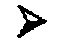 Alkyl- und/oder Alkenyloligoglykoside mit 8 bis 22 Kohlenstoffatomen im Alk(en)ylrest und deren ethoxylierte Analoga;
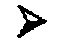 Anlagerungsprodukte von 1 bis 15 Mol Ethylenoxid an Ricinusöl und/oder gehärtetes Ricinusöl;
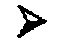 Anlagerungsprodukte von 15 bis 60 Mol Ethylenoxid an Ricinusöl und/oder gehärtetes Ricinusöl;
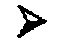 Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
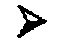 Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
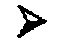 Mischester aus Pentaerythrit, Fettsäuren, Citronensäure und Fettalkohol gemäß **DE 1165574 PS** und/oder Mischester von Fettsäuren mit 6 bis 22 Kohlenstoffatomen, Methylglucose und Polyolen, vorzugsweise Glycerin oder Polyglycerin.
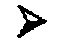 Mono-, Di- und Trialkylphosphate sowie Mono-, Di- und/oder Tri-PEG-alkylphosphate und deren Salze;
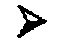 Wollwachsalkohole;
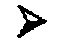 Polysiloxan-Polyalkyl-Polyether-Copolymere bzw. entsprechende Derivate;
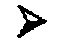 Polyalkylenglycole sowie
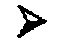 Glycerincarbonat.

Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE 2024051 PS** als Rückfettungsmittel für kosmetische Zubereitungen bekannt

Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, dass sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partiaiglyceride.

Als Sorbitanester kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesquitartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitandimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische.

Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

Weiterhin können als Emulgatoren zwitterionische Tenside verwendet werden. Als zwitterionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Besonders geeignete zwitterionische Tenside sind die sogenannten Betaine wie die N-Alkyl-N,N-dimethylammoniumglycinate, beispielsweise das Kokosalkyldimethylammoniumglycinat, N-Acylaminopropyl-N,N-dimethylammoniumglycinate, beispielsweise das Kokosacylaminopropyldimethylammoniumglycinat, und 2-Alkyl-3-carboxylmethyl-3-hydroxyethylimidazoline mit jeweils 8 bis 18 C-Atomen in der Alkyl- oder Acylgruppe sowie das Kokosacylaminoethylhydroxyethylcarboxymethylglycinat. Besonders bevorzugt ist das unter der CTFA-Bezeichnung *Cocamidopropyl Betaine* bekannte Fettsäureamid-Derivat. Ebenfalls geeignete Emulgatoren sind ampholytische Tenside. Unter ampholytischen Tensiden werden solche oberflächenaktiven Verbindungen verstanden, die außer einer C_{8/18}-Alkyl- oder -Acylgruppe im Molekül mindestens eine freie Aminogruppe und mindestens eine -COOH- oder -SO₃H-Gruppe enthalten und zur Ausbildung innerer Salze befähigt sind. Beispiele für geeignete ampholytische Tenside sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 18 C-Atomen in der Alkylgruppe. Besonders bevorzugte ampholytische Tenside sind das N-Kokosalkylaminopropionat, das Kokosacylaminoethylaminopropionat und das C_{12/18}-Acylsarcosin.

Schließlich kommen auch Kationtenside als Emulgatoren in Betracht, wobei solche vom Typ der Esterquats, vorzugsweise methylquaternierte Difettsäuretriethanolaminester-Salze, besonders bevorzugt sind.

### Hydrotrope

Als Lösungsvermittler oder Hydrotrope eignen sich beispielsweise Ethanol, Isopropylalkohol, oder Polyole eingesetzt werden. Letztere besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind
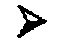 Glycerin;
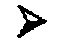 Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
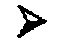 technische Oligoglyceringemische mit einem Eigenkondensationsgrad von 1,5 bis 10 wie etwa technische Diglyceringemische mit einem Diglyceringehalt von 40 bis 50 Gew.-%;
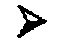 Methyolverbindungen, wie insbesondere Trimethylolethan, Trimethylolpropan, Trimethylolbutan, Pentaerythrit und Dipentaerythrit;
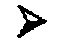 Niedrigalkylglucoside, insbesondere solche mit 1 bis 8 Kohlenstoffen im Alkylrest, wie beispielsweise Methyl- und Butylglucosid;
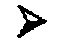 Zuckeralkohole mit 5 bis 12 Kohlenstoffatomen, wie beispielsweise Sorbit oder Mannit,
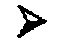 Zucker mit 5 bis 12 Kohlenstoffatomen, wie beispielsweise Glucose oder Saccharose;
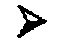 Aminozucker, wie beispielsweise Glucamin;
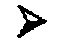 Dialkoholamine, wie Diethanolamin oder 2-Amino-1,3-propandiol.

Die Konzentration der Emulgatoren kann bezogen auf die Wachse 1 bis 20 und vorzugsweise 5 bis 10 Gew.-% betragen. Die Menge an Lösungsvermittler richtet sich ausschließlich nach der Wasserdispergierbarkeit der Wachse.

### Herstellung der Mikrokapseln

Nach der Herstellung der Matrix aus Gelbildner, Chitosan und Wachsen wird in einer besonderen Ausführungsform des Verfahrens die Matrix in einer Ölphase unter starker Scherung sehr fein dispergiert, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im dritten Schritt erfolgt dann die eigentliche Verkapselung, d.h. die Ausbildung der Hüllmembran durch Inkontaktbringen des Chitosans in der Matrix mit den anionischen Polymeren. Hierzu empfiehlt es sich, die in der Ölphase dispergierte Matrix bei einer Temperatur im Bereich von 40 bis 100, vorzugsweise 50 bis 60 °C mit einer wässrigen, etwa 0,1 bis 3 und vorzugsweise 0,25 bis 0,5 Gew.-%ige wässrigen Lösung des Anionpolymers, vorzugsweise des Alginats zu waschen und dabei gleichzeitig die Ölphase zu entfernen.

In gleicher Weise ist es möglich, im ersten Schritt eine Matrix aus Gelbildner, Anionpolymer und Wachs herzustellen, die Matrix in einer Ölphase zu dispergieren und dann die Kapseln durch Fällung mit einer Chitosanlösung herzustellen. Dazu reicht es aus, in der obigen Herstellvorschrift nur jeweils "Anionpolymer" und "Chitosan" zu vertauschen und die Mengenangaben beizubehalten. In zwei weiteren alternativen Ausführungsformen kann jeweils auf die Dispergierung in einer Ölphase verzichtet werden, dann werden jedoch in der Folge eher größere Kapseln erhalten. Somit stehen zur Herstellung der Chitosanmikrokapseln insgesamt vier Verfahren zur Verfügung. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise 1 bis 3 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Entsprechende Produkte sind beispielsweise von der Firma Primacare, S.L unter den Marken Primaspheres® und Primasponges® im Markt.

### Beispiele

**Beispiel H1.** In einem 500-ml-Dreihalskolben mit Rührer und Rückflußkühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in 88 ml Wasser und dann mit einer Zubereitung von 25 g Chitosan (Hydagen® DCMF, 1 Gew.-%ig in Glycolsäure, Cognis Deutschland GmbH, Düsseldorf/FRG), 10 g Carnaubawachs, 0,5 g Phenonip® (Konservierungmittelmischung enthaltend Phenoxyethanol und Parabene) und 0,5 g Polysorbat-20 (Tween® 20, ICI) in 64 g Wasser versetzt. Die erhaltene Matrix wurde filtriert, auf 60 °C erwärmt und in eine 0,5 Gew.-%ige Natriumalginatlösung getropft. Zum Erhalt von Mikrokapseln gleichen Durchmessers wurden die Zubereitungen anschließend gesiebt.

**Beispiel H2.** In einem 500-ml-Dreihalskolben mit Rührer und Rückflußkühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis Deutschland GmbH, Düsseldorf/FRG), 0,5 g Candelillawachs und 0,5 g Phenonip® (in ad 100 g Wasser versetzt. Die erhaltene Matrix wurde filtriert, auf 50 °C temperiert und unter starken Rühren im 2,5fachen Volumen Paraffinöl, das zuvor auf 15 °C gekühlt worden war, dispergiert. Die Dispersion wurde anschließend mit einer wässrigen Lösung enthaltend 1 Gew.-% Natriumlaurylsulfat und 0,5 Gew.-% Natriumalginat und dann mehrfach mit einer 0,5 Gew.-%igen wässrigen Phenoniplösung gewaschen, wobei die Ölphase entfernt wurde. Nach dem Sieben wurde eine wässrige Zubereitung erhalten, die 8 Gew.-% Mikrokapseln mit einem mittleren Durchmesser von 1 mm enthielt.

**Beispiel H3.** In einem 500-ml-Dreihalskolben mit Rührer und Rückflußkühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g C₂₀-C₂₈-Paraffinwachs in 88 ml Wasser und dann mit einer Zubereitung von 2,5 g Natriumalginat in Form einer 10 Gew.-%igen wässrigen Lösung, 5 g Squalan (Cetiol® SQ, Cognis Deutschland GmbH), 0,5 g Phenonip® und 0,5 g Polysorbat-20 (Tween® 20, ICI) in 64 g Wasser versetzt. Die erhaltene Matrix wurde filtriert, auf 60 °C erwärmt und in eine 1 Gew.-%ige Lösung von Chitosanglycolat in Wasser getropft. Zum Erhalt von Mikrokapseln gleichen Durchmessers wurden die Zubereitungen anschließend gesiebt

**Beispiel H4.** In einem 500-ml-Dreihalskolben mit Rührer und Rückflußkühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Ozokeritwachs in ad 100 g Wasser und dann mit einer Zubereitung von 2,5 g Natriumalginat in Form einer 10 Gew.-%igen wässrigen Lösung, 5 g Dicaprylyl Carbonat (Cetiol® CC, Cognis Deutschland GmbH) und 0,5 g Phenonip® (in ad 100 g Wasser versetzt. Die erhaltene Matrix wurde filtriert, auf 50 °C temperiert und unter starken Rühren im 2,5fachen Volumen Paraffinöl, das zuvor auf 15 °C gekühlt worden war, dispergiert. Die Dispersion wurde anschließend mit einer wässrigen Lösung enthaltend 1 Gew.-% Natriumlaurylsulfat und 0,5 Gew.-% Chitosanglycolat und dann mehrfach mit einer 0,5 Gew.-%igen wässrigen Phenoniplösung gewaschen, wobei die Ölphase entfernt wurde. Nach dem Sieben wurde eine wässrige Zubereitung erhalten, die 8 Gew.-% Mikrokapseln mit einem mittleren Durchmesser von 1 mm enthielt

## Patentansprüche

1. Verwendung von mit Wachsen beladenen Chitosanmikrokapseln als Wärmespeicher zur Ausrüstung von Fasern, Garnen und textilen Flächengebilden.

2. Verwendung nach Anspruch 1, **dadurch gekennzeichnet, dass** man Chitosanmikrokapseln einsetzt, welche Wachse enthalten, die ausgewählt sind aus der Gruppe, die gebildet wird von Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachsen, Mikrowachsen, Montanesterwachsen, Sasolwachsen, hydrierten Jojobawachsen sowie Polyalkylenwachsen und Polyethylenglycolwachsen.

3. Verwendung nach Anspruch den Ansprüchen 1 und/oder 2, **dadurch gekennzeichnet, dass** man mit Wachsen beladene Chitosanmikrokapseln einsetzt, die man erhält, indem man
(a) aus Gelbildnern, Chitosanen und Wachsen eine Matrix zubereitet und
(b) die Matrix mit wäßrigen Lösungen anionischer Polymere behandelt.

4. Verwendung nach Anspruch den Ansprüchen 1 und/oder 2, **dadurch gekennzeichnet, dass** man mit Wachsen beladene Chitosanmikrokapseln einsetzt, die man erhält, indem man
(a) aus Gelbildnern, Chitosanen und Wachsen eine Matrix zubereitet,
(b) die Matrix in einer Ölphase dispergiert,
(c) die dispergierte Matrix mit wäßrigen Lösungen anionischer Polymere behandelt und dabei die Ölphase entfernt.

5. Verwendung nach Anspruch den Ansprüchen 1 und/oder 2, **dadurch gekennzeichnet, dass** man mit Wachsen beladene Chitosanmikrokapseln einsetzt, die man erhält, indem man
(a) aus Gelbildnern, anionischen Polymeren und Wachsen eine Matrix zubereitet und
(b) die Matrix mit wäßrigen Chitosanlösungen behandelt.

6. Verwendung nach Anspruch den Ansprüchen 1 und/oder 2, **dadurch gekennzeichnet, dass** man mit Wachsen beladene Chitosanmikrokapseln einsetzt, die man erhält, indem man
(a) aus Gelbildnern, anionischen Polymeren und Wachsen eine Matrix zubereitet,
(b) die Matrix in einer Ölphase dispergiert,
(c) die dispergierte Matrix mit wäßrigen Chitosanlösungen behandelt und dabei die Ölphase entfernt.

7. Verwendung nach mindestens einem der Ansprüche 1 bis 6, **dadurch gekennzeichnet, dass** man Mikrokapseln einsetzt, die als Gelbildner Heteropolysaccharide oder Proteine enthalten.

8. Verwendung nach mindestens einem der Ansprüche 1 bis 7, **dadurch gekennzeichnet, dass** man Mikrokapseln einsetzt, die als anionische Polymere Salze der Alginsäure oder anionische Chitosanderivate enthalten.

## Claims

1. The use of chitosan microcapsules charged with waxes as heat stores for finishing fibers, yarns and flat textile materials.

2. The use claimed in claim 1, **characterized in that** chitosan microcapsules containing waxes selected from the group consisting of candelilla wax, carnauba wax, Japan wax, espartograss wax, cork wax, guaruma wax, rice oil wax, sugar cane wax, ouricury wax, montan wax, beeswax, shellac wax, spermaceti, lanolin (wool wax), uropygial fat, ceresine, ozocerite (earth wax), petrolatum, paraffin waxes, microwaxes, montan ester waxes, sasol waxes, hydrogenated jojoba waxes and polyalkylene waxes and polyethylene glycol waxes are used.

3. The use claimed in claims 1 and/or 2, **characterized in that** wax-charged chitosan microcapsules obtained by
(a) preparing a matrix from gel formers, chitosans and waxes and
(b) treating the matrix with aqueous solutions of anionic polymers
are used.

4. The use claimed in claims 1 and/or 2, **characterized in that** wax-charged chitosan microcapsules obtained by
(a) preparing a matrix from gel formers, chitosans and waxes,
(b) dispersing the matrix in an oil phase and
(c) treating the dispersed matrix with aqueous solutions of anionic polymers and removing the oil phase in the process
are used.

5. The use claimed in claims 1 and/or 2, **characterized in that** wax-charged chitosan microcapsules obtained by
(a) preparing a matrix from gel formers, anionic polymers and waxes and
(b) treating the matrix with aqueous chitosan solutions
are used.

6. The use claimed in claims 1 and/or 2, **characterized in that** wax-charged chitosan microcapsules obtained by
(a) preparing a matrix from gel formers, anionic polymers and waxes,
(b) dispersing the matrix in an oil phase,
(c) treating the dispersed matrix with aqueous chitosan solutions and removing the oil phase in the process
are used.

7. The use claimed in at least one of claims 1 to 6, **characterized in that** microcapsules containing heteropolysaccharides or proteins as gel formers are used.

8. The use claimed in at least one of claims 1 to 7, **characterized in that** microcapsules containing salts of alginic acid or anionic chitosan derivatives as anionic polymers are used.

## Revendications

1. Utilisation de microcapsules de chitosan chargées de cires en tant qu'accumulateurs de chaleur pour l'équipement de fibres, de fils et de tissus.

2. Utilisation selon revendication 1,
**caractérisée en ce qu'**
on utilise des microcapsules de chitosan qui contiennent des cires choisies dans le groupe formé de cire de Candelilla, cire de Carnauba, cire du Japon, cire d'Esparto, cire de liège, cire de Guaruma, cire d'huile de germes de riz, cire de betterave à sucre, cire d'Ouricury, cire de Montan, cire d'abeille, cire de shellac, cétine, lanoline (graisse de laine), graisse uropygienne, cérésine, ozokérite (cire naturelle), vaseline, cires de paraffine, micro-cires, cires d'ester de Montan, cires de Sasol, cires de jojoba hydrogénées ainsi que cires de polyalkylène et de polyéthylène glycol.

3. Utilisation selon la revendication/les revendications 1 et/ou 2,
**caractérisée en ce qu'**
on utilise des microcapsules de chitosan chargées de cires que l'on obtient
(a) en préparant une matrice à partir de gélifiants, de chitosans et de cires,
(b) en traitant la matrice avec des solutions aqueuses de polymères anioniques.

4. Utilisation selon la revendication/les revendications 1 et/ou 2,
**caractérisée en ce qu'**
on utilise des microcapsules de chitosan chargées de cires que l'on obtient
(a) en préparant une matrice à partir de gélifiants, de chitosans et de cires,
(b) en dispersant la matrice dans une phase huileuse,
(c) en traitant la matrice dispersée avec des solutions aqueuses de polymères anioniques et en éliminant dans le même temps la phase huileuse.

5. Utilisation selon la revendication/les revendications 1 et/ou 2,
**caractérisée en ce qu'**
on utilise des microcapsules chargées de cires que l'on obtient
(a) en préparant une matrice à partir de gélifiants, de polymères anioniques et de cires et
(b) en traitant la matrice avec des solutions de chitosan aqueuses.

6. Utilisation selon la revendication/ les revendications 1 et/ ou 2,
**caractérisée en ce qu'**
on utilise des microcapsules de chitosan chargées de cires que l'on obtient
(a) en préparant une matrice à partir de gélifiants, de polymères anioniques et de cires,
(b) en dispersant la matrice dans une phase huileuse,
(c) en traitant la matrice dispersée avec des solutions de chitosan aqueuses et en éliminant dans le même temps la phase huileuse.

7. Utilisation selon au moins l'une quelconque des revendications 1 à 6,
**caractérisée en ce qu'**
on utilise des microcapsules qui contiennent des hétéropolysaccharides ou des protéines en tant que gélifiants.

8. Utilisation selon au moins l'une quelconque des revendications 1 à 7,
**caractérisée en ce qu'**
on utilise des microcapsules qui contiennent des sels de l'acide alginique ou des dérivés de chitosan anioniques en tant que polymères anioniques.
